# EUROPEAN PATENT APPLICATION

(11) **EP 2 327 531 A2**
(43) Date of publication of application: **01.06.2011**
(21) Application number: 10191999.1
(22) Date of filing: 22.11.2010
(51) Int. Cl.: B29C 47/12, B29C 47/24, B29D 28/00

(54) **A method for manufacturing products made of wood plastic composite material**

(30) Priority: 25.11.2009 IT MI20092072
(71) Applicant: Tenax S.p.A., 23897 Viganò (Lecco) (IT)
(72) Inventor: Pierluigi, Maggioni, 23891, Barzanò (Lecco) (IT)
(74) Representative: Ponzellini, Gianmarco

(57) **Abstract**

A method for realising products made of a composite material based on wooden particle elements, comprises a stage of preparing at least a polymer matrix, a stage of preparing a filler material comprising a multiplicity of wood particles, a stage of obtaining a composite material by means of mixing the polymer matrix and said filler material, and a stage of forming a product consisting at least partially of said composite material; the stage of forming a product consisting at least at sub-stage of extrusion through a forming head.

## Description

The invention relates to a method for realising semi-finished manufactures and/or products made of a composite material based on wooden particle elements in a plastic matrix, by extrusion or co-extrusion.

In detail, the present invention relates to a new method for extrusion of WPC mixtures with the aim of realising complex products among which nets, meshes or grids.

As is known there exist on the market products realised based on WPC (an acronym of Wood-Plastic Composite) materials or mixtures which indicates materials made of a prevalently polymer nature, such as PP or PE, with a dispersion of granular or powder elements made of wood, such as shavings, working waste, tiny splinters and so on): these materials are prevalently used in the decking market, i.e. in making cladding for sea platforms, walkways, verandas, terraces etc. and in general all structures subjects to the weather and external agents and which, if made of more precious materials, such as wood, would require frequent and expensive maintenance/repair operations.

In more recent applications WPC materials have also been used for realising surfaces for transport of medium-to-light goods or loads, avoiding the need to treat the surfaces (generally made of wood) against parasites and fungus.

At present WPC-based products are obtained by means of simple extrusion processes destined to produce manufactures which have a closed geometry, delimited in plan view by a generatrix line which, in turn, is replicated continuously along directrices.

In other terms, the rigid shape of the generatrix develops in a straight direction and undeformedly along the directrix.

By operating with the above method, elements, slabs, sheets, films, bars or tubular elements of a desired length can be obtained.

It is clear that these semi-finished workpieces, definable as constant-section elements, are obtained with the aid of fixed extrusion heads lacking in mobile elements and thus giving rise to a single product having an *a prior* predetermined shape.

The above-described methods, though being extensively applied, do however exhibit some not insignificant drawbacks.

The wooden particles which constitute WPC materials are usually sourced from recycling operations, while the substances functioning as matrices are generally polymers of various nature according to needs.

Generally the production of the manufactures is actuated by means of dies or fixed extrusions heads, i.e. without parts in motion: this considerably limits the possible geometries obtainable with a single production line, and further does not enable changing, with satisfactory costs and times, a given product shape should production needs require it.

Known plants enable the extrudable material (plastic polymer, percentage of wooden additive, additives etc.) to be varied, as well as some critical management parameters of the machine (T, screw velocity, pressures etc.) and obviously the length of the element: on the other hand the shape of the die and its outlet section, as well as the product wall thicknesses are invariable in the production system, or in the best cases can, by changes to details, be subject to very limited modification with respect to the design specifications during machine set-up.

Purely by way of example, in some limited applications, the thicknesses of the walls of the sheets can be modified, usually however to a very limited degree, by regulating the extrusion head before activating the machine and certainly not during functioning thereof.

WPC materials, however, have special characteristics, mainly connected with their nature, i.e. the wooden bodies contained therein, which make them difficult to manipulate with other and different production methods. For example, the diversity of response of the wood to heat stress can cause, in some processes, the formation of degraded portions or even burnt portions; in fact the wooden part of the mixture (if subjected to excessive heat flow) can be charred even if completely surrounded by the polymer matrix (this is known as flameless combustion).

This very much limits operating choice, since there can emerge incompatibilities between the heating needs of the production plant and those of the bodies dispersed in the plastic matrix.

In fact it happens that in some production situations smoke and wood-burning smells emanate, with even breaking of the molten mixture in transit in the zone of the die/extrusion mould, mainly due to the gases which have formed during the process and which constitute a further important limitation in adopting different productive methods.

Also worthy of note is the fact that the thermo-chemical degradation of the wood chips leads to a substantial unpredictability of the final characteristics of the product, and this reflects negatively both on the mechanical performance and on the aesthetic appearance of the product.

Further, the degradation of the wooden particles can cause much blocking and/or degradation also of the instruments for working and/or forming the products.

Not insignificant is the difficulty of controlling the roughness and the surface finishing of the final product, sometimes incompatible with the destination use of the product.

The realising of complex shapes with connecting portions between them is a substantially unresolved problem today in the sector of WPC materials.

Taking account of the above-described drawbacks, the aim of the present invention is to realise a method for producing manufactures made of a composite material based on wood-chip elements (WPC mixtures) which can obviate the above-described drawbacks.

The present invention in particular provides a method which enables immediate production (that is, without any additional operations after the forming of the product itself, which operations would substantially change the geometry and/or the topology) of products made of WPC material, and having a very wide variety of shapes having variable sections along the directrix (and therefore not necessarily limited to elements obtained starting from a base generatrix defined by a closed line that is constantly reproduced along the longitudinal development of the piece).

An aim of the invention is to enable optimal management of the production process even in the presence of parameters which temporally vary, for obtaining the complex-shaped products.

A further aim of the invention is to make available products such as nets, grids, meshes or the like which are relatively inexpensive, have a good aesthetic appearance and exhibit characteristics of durability and resistance to dynamic and atmospheric agents.

These and other aims, which will better emerge during the course of the following description, are substantially attained thanks to a method as in the present invention.

Further characteristics and advantages will more fully emerge from a detailed description of a method (by way of example, but not limiting) for realising products based on WPC mixtures having the characteristics illustrated in the appended claims.

With reference to the claims, the method of the invention is generally, though not exclusively, addressed to obtaining WPC mixture-based products in the form of nets, grids, meshes or the like products obtained by extrusion and/or co-extrusion.
Figure 1 illustrates an example of an extrusion head/die having relative rotary motion between different elements and adaptable for implementing the present method by means of which it is possible to determine, together with the set relative motion imposed, the shape and geometry of the WPC product to be manufactured;
figure 2 is a slim reticular sheet-form product having a rhomboid mesh made of WPC, in which a green die has been inserted in the mixture;
figure 3 is a rigid reticular tubular product mesh made of natural-coloured WPC;
figure 4 is a rigid reticular tubular product mesh made of WPC;
figure 5 is a rigid reticular tubular product mesh made of coloured WPC;
figure 6 is a reticular sheet-shaped product having a high thickness and having a rhomboid mesh made of WPC.

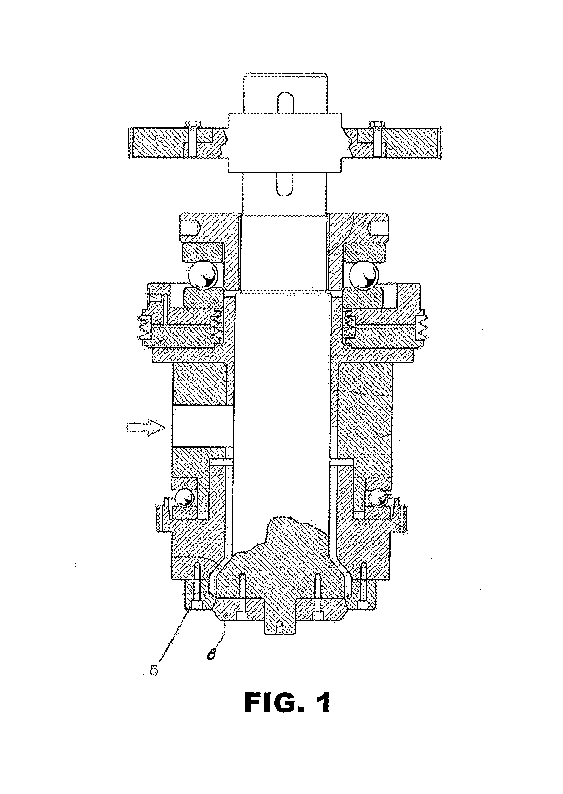

The product forming stage in accordance with any one of figures from 2 to 5, is advantageously made by extrusion through a forming head provided with mobile parts (continuously, by pulsations or rotary). A possible example of the extrusion head/die is illustrated by way of example in figure 1.

For the purposes of the present invention, it has been found that the best results in terms of mechanical-aesthetic quality of the finished product, taking duly into account the possibility of realising the production method without creating any issues in terms of final product quality and causing problems or breakdowns of the extruder/co-extruder machinery, are obtained with a composite material made up as follows: - a mass percentage of wood particles comprised between 20% and 35%, and preferably between 20% and 25% mass; and

a polymer matrix comprising a pre-treated polyolefin mixture, preferably polyethylene and polypropylene, having a range of possible percentages complementary to the make-up of the mass of wood particles as described above.

In operational terms, it has also been seen that starting from a compound (a premixed composition of polyolefin resins and wood granules present up to 70% in mass/volume), extrusions and co-extrusions can be made, with an intervention on the percentages of the mixture to bring them up to the above-described percentages, having a mass percentage of up to 35% of the wood particles, using machines usually applied for extrusion of PP or PE for manufacturing netted products.

In general, given a same volume, the weight reduction of the WPC product with respect to a product made only of plastic is in the range of 12-15%.

At this point it is important to distinguish between the prior art mentioned herein above and the present method: due to the above-mentioned problems (charring of the wood particles, the unpredictability of the physical-chemical characteristics of the composite material during the forming stage and so on) and intrinsically linked to WPC materials, it has surprisingly been found that WPC mixtures are extrudable by using extrusion machines having a mobile head (i.e. having parts in relative motion) normally used for extruding PP or PE for realising netted manufactures which exhibit limited contact and constraining surfaces between the various extruded elements which must then remain constrained to one another in order to guarantee the product integrity; the extrusion is performed while taking into account operating parameters which are selected such as to prevent degradation of the composite material, and in particular the degradation of the wood particles; to this end, the method advantageously comprises a stage of adaptation of one or more chemical-physical parameters of a flow of composite material (through the forming head). In greater detail, it can be seen how the above-mentioned stage of adapting the flow parameters is based on a sub-step of determining one or more theoretical flow parameters, which comprise (by way of non-limiting example) extrusion and/or heat gradient temperatures along an extrusion line and/or delivery pressure and/or flow delivery rate and/or drawing velocity of an extruded product (or also, as known in the field of extrusion, the melt flow index); for the purposes of the present invention, the theoretical flow parameters are correlated to an extrusion (which can be performed for example as a test extrusion preceding extrusion of the true and proper composite material, or can in any case derive from experimental testing performed previously) of only the polymer matrix through the forming head.

Following determination of the theoretical flow parameters, the effective flow parameters are determined: this operation is performed by correcting the theoretical flow parameters with multiplication factors preferably derived from experimental testing.

Once the effective flow parameters have been determined, and thus having the guarantee that the extruder/co-extruder thus set-up will not be subjected to phenomena of degradation of the wood particles, the extrusion and/or co-extrusion machinery can be set using the effective flow parameters, with the aim of enabling extrusion (or co-extrusion) while preventing any onset of accumulations of charred materials or flameless combustion gas and whatever else might alter and/or block the flow of the composite material into the extruder.

With the aim of attaining the above-described effects, the corrective parameters can advantageously comprise:
a corrective temperature parameter (preferably negative and still more preferably comprised between 5% and 20% with respect to a theoretical outflow temperature of the polymer matrix - PE or PP - alone through the extrusion and/or co-extrusion machinery).

In general the above-mentioned temperature variations do not always occur in a same place with a same entity.

In general the connecting zone between the extruder/die head, head and final die are those most subject to this, with reductions of 10-20% as mentioned above. The absolute operating temperatures must in general be less than 220°.

Then: a corrective flow rate parameter (preferably positive and still more preferably comprised between 12% and 15% with respect to a theoretical outflow (Kg/h) of the polymer matrix - PE or PP - only, through the extrusion and/or co-extrusion machinery);
a corrective drawing velocity parameters (preferably positive and still more preferably comprised between 15% and 30% with respect to a theoretical drawing velocity of only the polymer matrix downstream of the extrusion and/or co-extrusion machinery and preferably about 24%).

The operating drawing velocities will in general be above 1.2 m/min.

Note that the drawing velocity and the rotating velocity of the rollers and/or the drawing devices immediately downstream of the extrusion/die which give the semi-finished workpiece the correct reproduction velocity of the line, usually expressed in metres per minute, constitutes a fundamental parameter for estimating the performance of the machine and the process.

The increase of between 15% and 30%, in general comprised between 20% and 30% is necessary for maintaining the product within the established dimensional tolerances, always with respect to the velocity of the respective element made of plastic only.

With reference to the minimum and maximum working flow rates with WPC materials, in general it has been seen that in order to obtain a continuity in the extrusion process the minimum value is about 100 g/minute up to a maximum flow rate of 2800 g/minute.

Obviously these parameters are linked to the size of the head/die, the activating mechanism thereof (rotary or pulsating) and also the residence times of the material already processed by the screw, ready to be formed.

The determination of the setting and absolute value of the corrective parameters is dictated in the present invention by the special characteristics of the composite material which flows through the forming head, and in particular: the corrective temperature parameter is selected with the aim of preventing onset of flameless combustions and/or charring of the wooden particles (phenomena which can usually occur at lower temperatures than those at which the polymer matrix can degrade);
the corrective flow rate parameter is selected with the aim of contrasting the greater static inertia and the greater ability to produce friction forces of the composite material with respect to the polymer matrix alone; the corrective drawing parameter velocity is selected with the aim of guaranteeing a suitable compromise between the spontaneous contraction of the product after the extrusion head and the maintaining of a satisfying production rate, and takes account of the various flow properties of the composite material with respect to the polymer matrix alone (an optimal value of the parameter can be about 24% more with respect to the drawing velocity applicable to a product realised only with the polymer matrix);
the maximum/minimum flow rate parameter is selected consequently to a balancing between the production needs (that is, obtaining a satisfactory quantity of product over a given time) and the technical needs, such as for example avoiding blocking of the propulsion screws of the extruder and/or in the flow conduits located downstream of the propulsion screws or also in proximity of the extrusion head.

With special reference to the corrective temperature parameter, note that according to momentary needs it might be a ready correction of a single temperature (in a corresponding single point of the extrusion/co-extrusion line), or it can be a series of corrective temperature parameters, each of which is associated to different points in the extrusion/co-extrusion line: in other words, the present method can be considered to comprise determination of a plurality of corrective temperature parameters or, in a substantially equivalent way, a corrective parameter of a head gradient along the extrusion/co-extrusion line. Operatively the polymer matrix can comprise at least a polypropylene or a polyethylene, which can be high-density or low-density according to current production needs. More generally, the polymer matrix can comprise polyolefins or any other suitable substance for the purpose.

With the aim of improving the internal homogeneity of the end product, and especially in order to avoid the formation of weakened zones internally of the product, the present method can advantageously comprise a stage of separation of any gassy substances imprisoned in the polymer matrix and/or in the wooden particles and/or in the composite material. This stage of separation (also definable as a degassing stage) can be obtained using various methods.

In the present method a drying stage (initial or preparatory) can be performed, or more precisely, a water-separation stage, at least involving the wood particles; the drying has the aim of removing the water imprisoned in the particles, which during extrusion/co-extrusion can evaporate and give rise to pockets of trapped steam, with obvious damage to the homogeneity of the composite material and with undesired effects on the extrusion/co-extrusion line.

Operatively, the drying can occur in batches (i.e. a single stage for all the material to be used which is contemporaneously treated in a closed environment and in particular in a substantially static condition, i.e. not moved in an extruder) in an environment placed under partial or total depression: the best parameters for drying have surprisingly been revealed to be the following:
a pressure difference (negative) of about 0.9 bar with respect to the external environment (in general comprised between -0.5 and -1.3 bar; an overall volume of compound granules of about 2 litres (in general between 1.5 and 2.5 litres); and
a drying time of about 15 seconds (in general between 10 and 20 seconds).

Note that for the purposes of the present invention, the degassing (in generally however avoided) and the drying can be considered as sub-stages of a general operating stage consisting in separation of any extraneous substances (or, in other words, undesired substances during extrusion and/or during formation and subsequent solidification of the product) in the liquid and/or gaseous phase imprisoned in the polymer matrix and/or wood particles and/or the composite material.

The present method can also include an operating stage consisting in adding at least an additive component to the polymer matrix and/or the wood particles: in particular, this additive component can be a friction-reducing agent (for example a lubricant or a wax) and/or at least a colorant.

In the spirit of the present invention, the addition of one or more additive components enables not only reducing the blocking risks in the extrusion/co-extrusion line, but also advantageously enables improving the final aspect of the product, from both the visual and the tactile points of view: it is in fact not infrequent for WPC-type compounds to exhibit, due to high presence of wood particles, an excessive surface roughness.

It is also worthy of note that the addition of the additive component can reduce the risk of degradation (by charring and/or flameless combustion) of the wood particles, especially in proximity of the forming/extrusion head.

The insertion of a colorant master into the mixture (with a chromatic tone compatible with the final application of the product) used in higher percentages to those advised by the supplier (up to 4 times greater) and containing waxes and similar substances, enables an aesthetically-acceptable molten mix to be obtained, keeps the extrusion process stabler and delays the degradation of the material in the head/die zone.

Thanks to the adoption of the extrusion/co-extrusion process, it is advantageously possible to move at least two mobile parts of the forming head in relation to one another: this operating stage enables a wide range of shapes of the products to be made, and is performed at the same time as the extrusion stage through the forming head.

Using forming heads with moving parts (for example pulsating heads and/or rotary heads) it is advantageously possible to define products exhibiting discontinuous surfaces of topologically multi-connected surfaces, of which some practical applications which will be described herein below.

To this end, figure 1 illustrates and example of an extrusion machine with a head/die with relative rotary motion between different elements (parts 5 and 6 are the shapers which determine, together with the relative rotary motion set, the shape and the geometry of the WPC product which will be extruded.

Note that the presence of moving parts in contact with the material during the extrusion stage increases friction and stress that are generated on the material itself with respect to the corresponding stresses which arise during extrusion with a fixed head (extrusion of simple elements).

Should technical-aesthetic needs require it, it is advantageously possible to couple the product made of compound material with at least a co-extrusion portion made of the polymer matrix: this operating stage, which in practice actuates a co-extrusion, can give rise to various types of product, such as for example objects having a flat and/or axial and/or radial symmetry.

Still by way of example, it can be noted how the present method enables defining strip-form products with two or more layers, in which a central layer made of WPC compound material can be coupled with one or more external layers made of simply polymer material; alternatively cylindrical-geometry bodies can be realised, exhibiting reinforcing ribs directed parallel along the extrusion direction or ring-formed structures (according to generatrices arranged successively to one another) between rings of WPC material and polymer material rings.

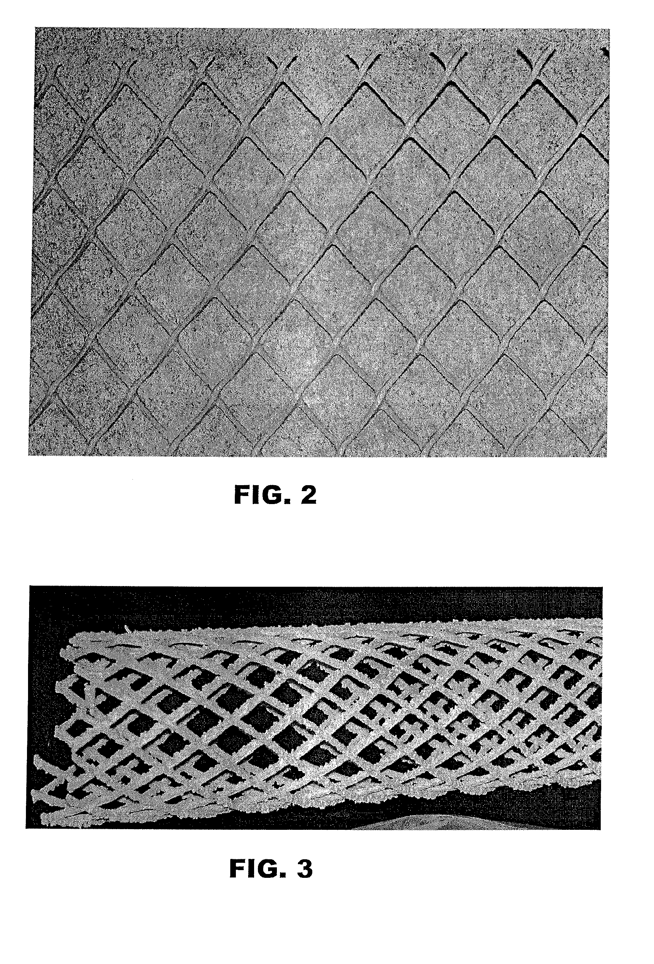

With the aim of ensuring the necessary coherence and connection between the various layers (continuous or discontinuous) of WPC material or polymer resin, the polymer resin layers can advantageously be realised using substances that are compatible with the polymer matrix used as a bond for the wood particles. The invention relates to a product (extruded or co-extruded) made of a compound material which comprises a polymer matrix and a multiplicity of wood particles dispersed in the polymer matrix, which is advantageously realised using the method of the present invention and exhibits a substantially flat development (or plate-shaped) and a net structure defining meshes having a polygonal and/or curved and/or mixed section. In other words, the present invention can realise strip-shaped products having a predetermined mesh (square, rhomboid, parallelogram, and so on) usable for decking works, or for realising walkways on grassy surfaces or muddy surfaces (figure 2).

Similarly, an object of the present invention is a product (again extruded or co-extruded) made of a compound material comprising a polymer matrix and a multiplicity of wood particles dispersed in the polymer matrix, which is realised with the method of the present invention and has a substantially-cylindrical development (i.e. comprising a base generatrix figure and a lateral surface defined by a continuous or discontinuous projection of the generatrix figure along a predetermined continuous directrix direction): a tubular product such as this can be applied in the field of gardening and horticulture (figures 3-5).

As can be understood by observing the illustrated embodiments, the netting product is realised by using the moving parts of the head and thus defining at least a first series of ribs that are substantially parallel to one another (not necessarily straight) and at least a second series of ribs that are substantially parallel to one another (also not necessarily straight) and transversal to the first ribs, for example perpendicular thereto. The first and the second ribs are reciprocally engaged to one another at contact and junction points such as to define a plurality of through-meshes in the net product.

In particular, the joint zones between the series of ribs are rather limited with respect to the development thereof and therefore it is of fundamental importance that the joint should be solid.

The presence of a high percentage of wood particles, such as that of the compounds at present on the market, is reflected in a degrading of the soundness of the connections, such that when the percentage of wooden filler material exceeds 40% the connection between the meshes is not created and if the percentage is not below 35% the resistance capability of the connections in the nodes (note that not all connections are properly formed anyway) is compromised and the final product is to be rejected due to the very poor mechanical performance thereof.

For this reason the manufacturing of netting products having through-meshes, i.e. where there are no other reinforcing elements such as internal cylindrical tubular structures in which the ribs are entirely constrained, requires the use of well-defined percentages in the composition of the starting WPC material.

Some embodiments of products made according to the present method will now be described: firstly a rigid tube made of WPC material is described, which has a net lateral surface exhibiting rhomboid meshes (figure 3).

This product is realised using, as a polymer matrix, high-density polyethylene (65% of mass) and wood powder (35% mass): this compound material is used for defining a product having a density of about 200 g/m, an external diameter of 88 mm and a thickness of the lateral wall of about 5 mm.

The parameters to which the extruder is set can be summarised as follows:
temperature in the zone of the forming head: 220°C (with respect to the temperature of 235°C usable for extruding the "pure" polypropylene);
a pressure difference of from 160 to 65 bar (i.e. 95 bar) through a filter element located between the extruder and a forming die located at the outlet of the extruder;
a composite material advancing velocity of about 2.4 m/min (against the about 1.2 m/min required for extrusion of only the polyethylene); and a screw rotating supply velocity (having a diameter of 45 mm) of 56 rpm (against the 20 rpm usually required for only polyethylene).

Outside the extruder, the product is keyed on a forming cylinder (having a diameter of about 80 mm and a length of about 200 mm), after which the product, thus keyed, is made to proceed into the cooling tub: optionally the compound material can have waxes and/or colorants added to it.

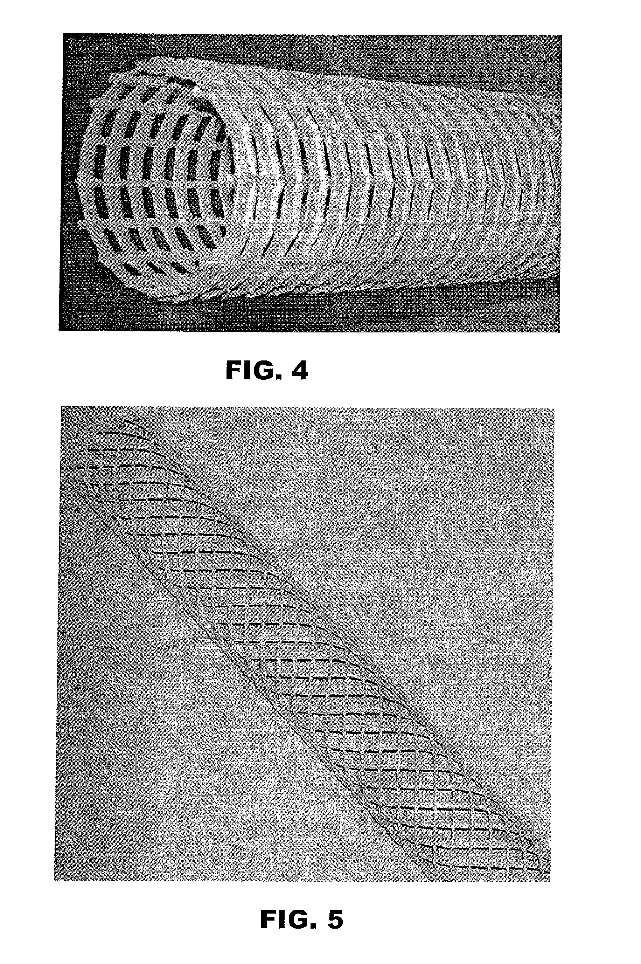

A further applicational example of the present method is constituted by a rigid tube having quadrangular meshes (figure 4), having a polypropylene polymer matrix (at 65% of mass) and wood powder (35% of mass): the salient characteristics of the finished product are given by a density of 260 g/m, an external diameter of 77 mm and a wall thickness of 4.5 mm.

The set parameters on the extruder for realising the product are the following: temperature (in the zone of the forming head): 210°C (with respect to the temperature of 230°C usable for extruding the polypropylene alone);
a pressure difference across the filter (located between the extruder and the die) of between 200 and 133 bar (i.e. 67 bar);
a composite material advancing velocity of about 1.26 m/min; and a screw rotating supply velocity (having a diameter of 45 mm) of 78.5 rpm.

In this case, to prevent collapse of the tubular product, on exit from the extrusion head it is keyed/clamped on a forming cylinder (before being cooled in water) having a diameter of 69 mm.

A further example of a product realisable with the present method is given by a slim flat netting with rhomboid meshes (figure 2), made of a WPC material having a polymer matrix of high-density polyethylene (80% in mass) and wood powder (20% in mass). This product has a density of about 640 g/m², a width of about 2m, a thickness of about 5m and the stages of the mesh (in the two development directions of the rhomboid figure) are about 33 and 35 mm.

The set parameters on the extruder for realising the above product are as follows:
temperature (in the zone of the forming head): 220°C (with respect to the temperature of 230°C usable for extruding the "pure" polyethylene);
a pressure difference across the filter (located between the extruder and the die) of from 200 to 135 bar (i.e. 65 bar);
a compound material advancing velocity of about 2.08 m/min (against 1.6 m/min for polyethylene alone); and
a screw rotating supply velocity (having a diameter of 120 mm) of 25 rpm (against the 20 rpm usually required for polyethylene alone). In this case, in order to prevent collapse of the plate-shaped product (or in other words, having a substantially two-dimensional conformation), on exiting the extrusion head the produce is keyed/clamped on a forming calibre (before being cooled in water) having a diameter of 650 mm.

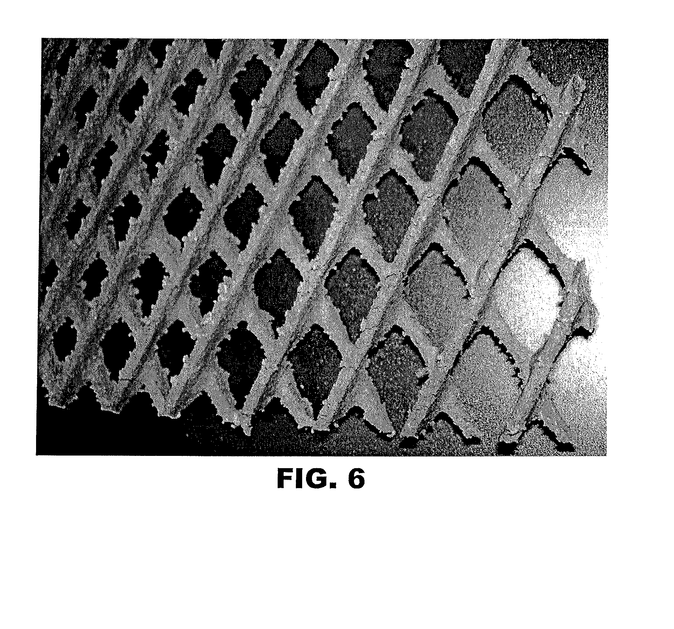

A further embodiment possible with the present method is given by a flat netting having a large thickness and exhibiting rhomboid meshes (figure 6), made of compound material having a polymer matrix of high-density polyethylene (76% in mass) and wood powder (24% in mass) and having the following characteristics in the final product: width 2 m, density 2000 g/m², thickness of about 16-18 mm, mesh steps (in the two development directions) of 18 and 26 mm.

The set parameters on the extruder for realising the above product are as follows:
temperature (in the zone of the forming head): 190°C (with respect to the temperature of 230°C usable for extruding the "pure" polyethylene);
a pressure difference across the filter (located between the extruder and the die) of from 170 to 65 bar (i.e. 105 bar);
a compound material advancing velocity of about 1.3 m/min (against 1 m/min for polyethylene alone); and
a screw rotating supply velocity (having a diameter of 120 mm) of 53.1 rpm (against the 45 rpm usually required for polyethylene alone).

In this case too, in order to prevent collapse of the plate-shaped product (or in other words, having a substantially two-dimensional conformation), on exit from the extrusion head the product is keyed/clamped on a forming calibre (before being cooled in water) having a diameter of 650 mm, while the process for realising a like product constituted only by polyethylene would require a standard calibre of about 860 mm.

The invention enables important advantages to be obtained.

Firstly, note how the special sequence of operating stages described herein above (and claimed herein below) enables the formation of the tools to be changed in real-time, which tools define the three-dimensional topology of the product. This leads to having available a high degree of operating flexibility in terms of both obtaining products having a discontinuous bilateral surface and/or a multi-connected surface and in terms of being able to vary the production cycles with extreme rapidity and ease.

Secondly, note that the present method enables extruded or co-extruded products to be obtained in which the properties of the wood particles are maintained and not degraded in the final product, i.e. without causing the internal formation of carbon deposits and/or combustion gases which might ruin the finished product aesthetically and/or mechanically (and which might also cause problems vis-à-vis the extruder and/or co-extruder machinery).

Further, the roughness and the surface finish can be validly controlled and modified with simple operations that can be performed during the production stage, guaranteeing a better control of the quality of the final product.

From the economic point of view, the compound based on recycled material of natural origin costs less than virgin resins, further guaranteeing a better aesthetic impact together with the advantages of greater resistance to external agents and aggressive chemicals; in general the durability characteristics are excellent. Finally, the present invention enables the present method to be realised also using extrusion/co-extrusion plants which are of known type and in operation, which means amortising plant costs practically immediately, with consequent low production and sales costs.

## Claims

1. A method for realising netting products made of a WPC composite material based on plastic elements and wooden particle elements, comprising the following stages:
- preparing at least one polymer matrix;
- preparing a filler material comprising a multiplicity of wood particles, preferably having shape and/or dimensions and/or composition different from each other;
- obtaining a WPC composite material by means of mixing said at least one polymer matrix and said filler material; and
- forming a product consisting at least partially of said composite material, **characterised in that** the stage of forming a product consisting at least partially of said composite material comprises at least a substage of extrusion through a forming head, there also being a stage of moving at least two parts of said forming head relatively to one another during the extrusion stage; the stage of moving the parts of the head being designed to form netting products.

2. Method according to claim 1, wherein it further comprises a stage of adapting chemical-physical parameters of a flow of said composite material, said stage of adapting chemical-physical parameters preferably comprising following substages:
- determining theoretical flow parameters, said parameters preferably comprising extrusion temperatures and/or heat gradients along an extrusion line and/or delivery pressures and/or delivery flow rates and/or speeds of drawing an extruded product, said primary flow parameters being correlated with an extrusion of polymer matrix alone;
- determining effective flow parameters by correcting said theoretical flow parameters with preferably experimental multiplying factors; and
- setting an extrusion and/or co-extrusion machine with said effective flow parameters.

3. Method according to claim 2, wherein correcting the effective parameters comprises at least:
- a corrective temperature parameter, preferably negative and even more preferably comprised between 5% and 20% compared with a theoretical outflow temperature of the polymer matrix alone through the extrusion and/or co-extrusion machine;
- a corrective flow rate parameter preferably, positive and even more preferably contained between 12% and 15% compared with a theoretical outflow rate of the polymer matrix alone through the extrusion and/or co-extrusion machine;
- a corrective drawing velocity parameter, preferably positive and even more preferably contained between 15% and 30% compared with a theoretical drawing speed of the polymer matrix alone downstream of the extrusion and/or co-extrusion machine; and
- a corrective flow rate parameter, positive or negative, capable of determining a range of flow rates of composite material comprised between 100 g/min and 2800 g/min.

4. Method according to any of the preceding claims, wherein said polymer matrix comprises at least a polypropylene or a polyethylene, the wood particles being preferably present in the composite material in overall percentages comprised between 20% and 35%, the overall percentages of said polypropylene and/or polyethylene being even more preferably complementary to said overall percentages of wood particles.

5. Method according to any one of the preceding claims, wherein it further comprises a sub-stage of drying at least of the wood particle elements, performed before the extrusion stage in order to remove water or moisture trapped therein, said sub-stage being performed on a batch, using in particular a drying kiln made for the treatment of plastic resins such as PA and PET, said sub-stage comprising, in greater detail :
- setting a pressure in the dry kiln between -0.5 and -1.3 bar, and in particular about 0.9 bar, with respect to the external pressure;
- introducing a volume of elements of between 1.5 and 2.5 litres, and in particular 2 litres;
- drying the elements for 10-20 seconds, and in particular for about 15 seconds.

6. Method according to any one of the preceding claims, wherein it further comprises a stage of adding at least an additive component to the polymer matrix and/or to the wood particles, said at least one additive component comprising an agent for reducing friction through the extruder/ co-extruder and/or at least one colorant.

7. Method according to any one of the preceding claims, wherein it further comprises a stage of coupling at least a co-extruded portion made of polymer matrix to said product consisting at least partially of WPC composite material, said at least one portion made of polymer matrix defining, preferably in cooperation with said product in composite material, an object having planar and/or axial and/or radial symmetry.

8. Method according to any one of the preceding claims, comprising a following stage:
- extruding the dried WPC composite through a forming head having at least two parts which move during the extrusion stage;
the moving parts of the head forming at least a first series of ribs substantially parallel to each other and at least a second series of ribs substantially parallel to the first series, the first and the second series of ribs being mutually engaged to each other at contact and junction points such as to form a plurality of through-meshes of a netting product.

9. The method of any one of the preceding claims, wherein the WPC composite material comprises the filling material having a multiplicity of wood particles of between 20% and 35% in mass, the mass percentage of the polymer matrix formed by they polyolefin material such as polypropylene and/or polyethylene being in particular not less than 60% in mass of the composite material and being preferably complementary to the percentage in mass of the filling material.

10. The method of any one of the preceding claims, wherein it further comprises a sub-stage of drying the WPC composite material in a negative-pressure environment and in particular a further sub-stage of including in the WPC composite material, before or after the drying stage, a colorant master containing waxes or like substances.

11. The method of claim 8, wherein the netting product in outlet from the extruding head is entirely constituted by the first and second series of ribbings, reciprocally engaged one to another exclusively at contact and junction points such as to define a plurality of through-meshes.

12. An extruded or co-extruded netting product made of a WPC composite material, comprising a polyolefin-based polymer matrix and a filler material comprising a multiplicity of wood particles dispersed in the polymer matrix, **characterised in that** it comprises a first series of ribbings that are substantially parallel to one another and at least a second series of ribbings which are substantially parallel to one another and transversal to the first series, the first and the second ribbings being reciprocally engaged one to the other at contact and junction points such as to define a plurality of through-meshes of the netting product, the WPC composite comprising the filler material in mass percentages comprised between 20% and 35%, the mass percentage of the polymer matrix formed of polyolefin material such as polypropylene and/or polyethylene being in particular not below 60% in mass of the composite material and preferably complementary to the mass percentages of the filler material.
